# EUROPÄISCHE PATENTANMELDUNG

(11) **EP 4 572 063 A1**
(43) Veröffentlichungstag der Anmeldung: **18.06.2025**
(21) Anmeldenummer: 24218527.0
(22) Anmeldetag: 10.12.2024
(51) Int. Cl.: H02J 3/14, H02J 3/32, H02J 3/38

(54) **STEUERUNGSSYSTEM ZUR VERBESSERUNG DER NETZSTABILITÄT EINES VERTEILNETZES FÜR ELEKTRISCHE ENERGIE**

(30) Priorität: 11.12.2023 DE 102023134621
(71) Anmelder: E.ON SE, 45131 Essen (DE)
(72) Erfinder: Berazaluce Minondo, Inigo, 45470 Mühlheim an der Ruhr (DE); Hernandez Salmeron, Luis Arturo, 40237 Düsseldorf (DE)
(74) Vertreter: Gunzelmann, Rainer

(57) **Zusammenfassung**

Ein Steuerungssystem zur Verbesserung einer Stabilität eines Verteilnetzes für elektrische Energie umfasst zumindest eine Vorrichtung zur Bereitstellung elektrischer Energie und zumindest eine erste Messvorrichtung, die dazu eingerichtet ist, eine durch die Vorrichtung zur Bereitstellung elektrischer Energie abgegebene elektrische Leistung zu messen. Weiter umfasst das Steuerungssystem mehrere elektrische Verbraucher und zumindest eine zweite Messvorrichtung, die dazu eingerichtet ist, eine elektrische Leistungsaufnahme der jeweiligen elektrischen Verbraucher zu messen. Eine Steuerungsvorrichtung ist dazu eingerichtet, basierend auf den Messungen der zumindest einen ersten Messvorrichtung und der zumindest einen zweiten Messvorrichtung einen Energiezuweisungskoeffizienten für jeden der mehreren elektrischen Verbraucher zu bestimmen. Weiter ist die Steuerungsvorrichtung dazu eingerichtet, die Vorrichtung zur Bereitstellung elektrischer Energie oder zumindest einen der elektrischen Verbraucher basierend auf den bestimmten Energiezuweisungskoeffizienten zu steuern.

## Beschreibung

Es wird ein Steuerungssystem zur Verbesserung der Netzstabilität eines Verteilnetzes für elektrische Energie offenbart. Das Steuerungssystem umfasst eine Steuerungsvorrichtung zur, insbesondere dynamischen, Zuweisung von lokal generierter elektrischer Energie zu mehreren elektrischen Verbrauchern in einem Verteilnetz für elektrische Energie.

Die zunehmende Verbreitung und Bedeutung von dezentral generierter elektrischer Energie, zum Beispiel durch Photovoltaikanlagen, erfordert einen Umbau und eine Erweiterung bestehender Verteilnetze für elektrische Energie, insbesondere bestehender Niederspannungsnetze.

In der Vergangenheit dienten Niederspannungsnetze im Wesentlichen zur Kopplung einer Vielzahl von elektrischen Verbrauchern mit einigen wenigen Vorrichtungen zur Bereitstellung elektrischer Energie. Insbesondere durch die Installation von Photovoltaikanlagen auf Gebäudedächern, aber auch durch die Verbreitung dezentraler Biomasseverstromungs - und Geothermieanlagen, weisen Niederspannungsnetze jedoch neben einer Vielzahl von elektrischen Verbrauchern vermehrt auch eine Vielzahl von Vorrichtungen auf, die elektrische Energie dezentral in die jeweiligen Niederspannungsnetze einspeisen.

Weiter kann die Menge der dezentral generierten und bereitgestellten elektrischen Energie stärkeren Schwankungen unterworfen sein, als dieses bei einer zentralen Einspeisung von elektrischer Energie üblicherweise zu erwarten ist.

Es besteht daher die Aufgabe, die lokale Speicherung von dezentral bereitgestellter elektrischer Energie zu verbessern.

Vorteilhaft für eine Belastung der Energieverteilnetze ist es weiter, lokal erzeugte Energie auch gleichzeitig lokal zu nutzen.

Ein Vorteil hierbei ist, dass zu Spitzenzeiten dezentral erzeugte Energie unmittelbar vor Ort durch eine erhöhte Energieabnahme kompensiert werden kann, sodass eine Belastung des Verteilnetzes verringert werden kann. Zum Beispiel kann die Batterie eines mit elektrischer Energie betriebenen Fahrzeugs bevorzugt dann geladen werden, wenn eine vor Ort installierte Photovoltaikanlage aufgrund optimaler Sonneneinstrahlung vergleichsweise viel elektrische Energie bereitstellt und gleichzeitig gerade vergleichsweise wenig elektrische Energie im Verteilnetz nachgefragt wird.

Es besteht daher auch die Aufgabe, einen planbaren Bedarf an elektrischer Energie basierend auf der Leistungsabgabe einer Vorrichtung zur Bereitstellung elektrischer Energie zu steuern.

Weiter betreiben in einigen Fällen mehrere unterschiedliche Verbraucher elektrischer Energie gemeinsam eine Vorrichtung zur Bereitstellung elektrischer Energie. Zum Beispiel kann die durch eine auf einem Mehrfamilienhaus installierte Photovoltaikanlage generierte elektrische Energie gleichberechtigt durch unterschiedliche Mieter oder Eigentümer des Mehrfamilienhauses genutzt werden. Die durch eine Vorrichtung zur Bereitstellung elektrischer Energie zur Verfügung gestellte Leistung muss den Verbrauchern in diesem Fall, insbesondere auch zu einer Verrechnung der selbst generierten elektrischen Energie mit der aus einem Verteilnetz bezogenen elektrischen Energie und zur Steuerung des zeitlich planbaren Energiebedarfs der einzelnen Verbraucher, anteilig zugewiesen werden.

Es besteht daher auch die Aufgabe, ein Steuerungssystem zur anteiligen Zuweisung von lokal generierter elektrischer Energie zu mehreren unterschiedlichen elektrischen Verbrauchern bereitzustellen.

Die Aufgaben werden durch ein Steuerungssystem nach dem Anspruch 1 gelöst. Vorteilhafte Ausgestaltungen werden durch die weiteren Ansprüche definiert.

Ein Steuerungssystem zur Verbesserung einer Stabilität eines Verteilnetzes umfasst zumindest eine Vorrichtung zur Bereitstellung elektrischer Energie und zumindest eine erste Messvorrichtung, die dazu eingerichtet ist, eine durch die Vorrichtung zur Bereitstellung elektrischer Energie, insbesondere gegenwärtig, abgegebene elektrische Leistung zu messen.

Weiter umfasst das Steuerungssystem mehrere elektrische Verbraucher und zumindest eine zweite Messvorrichtung, die dazu eingerichtet ist, eine, insbesondere gegenwärtige, elektrische Leistungsaufnahme eines jeweiligen elektrischen Verbrauchers zu messen.

Die zweite Messvorrichtung kann mehrere Einzelmessvorrichtungen umfassen, die jeweils dazu eingerichtet sind, eine, insbesondere gegenwärtige, elektrische Leistungsaufnahme eines der elektrischen Verbraucher zu messen.

Eine Steuerungsvorrichtung ist dazu eingerichtet, basierend auf den Messungen der zumindest einen ersten Messvorrichtung und basierend auf den Messungen der zumindest einen zweiten Messvorrichtung einen Energiezuweisungskoeffizienten für jeden der mehreren elektrischen Verbraucher zu bestimmen.

Weiter ist die Steuerungsvorrichtung dazu eingerichtet, die Vorrichtung zur Bereitstellung elektrischer Energie und/oder zumindest einen der elektrischen Verbraucher basierend auf den bestimmten Energiezuweisungskoeffizienten zu steuern oder zu regeln. Das Steuern oder das Regeln der Vorrichtung zur Bereitstellung elektrischer Energie und/oder des elektrischen Verbrauchers kann insbesondere das Aktivieren und/oder das Deaktivieren einer oder mehrerer Komponenten der Vorrichtung zur Bereitstellung elektrischer Energie und/oder des elektrischen Verbrauchers umfassen. Zum Beispiel können die Aufladung einer Vorrichtung zur Speicherung elektrischer Energie, eine Nachtspeicherheizung oder eine Ladestation für ein mit elektrischer Energie angetriebenes Fahrzeug aktiviert oder deaktiviert werden. Weiter kann das Steuern oder das Regeln der Vorrichtung zur Bereitstellung elektrischer Energie und/oder des elektrischen Verbrauchers das Erhöhen und/oder das Verringern einer Leistungsaufnahme und/oder einer Leistungsabgabe einer oder mehrerer Komponenten der Vorrichtung zur Bereitstellung elektrischer Energie und/oder des Verbrauchers umfassen. Zum Beispiel kann die Leistungsaufnahme und/oder die Leistungsabgabe einer Vorrichtung zur Speicherung elektrischer Energie, insbesondere einer Batterie, basierend auf den durch die Steuerungsvorrichtung bestimmten Energiezuweisungskoeffizienten erhöht und/oder verringert werden.

Ein Vorteil des Steuerungssystems ist, dass die durch die Vorrichtung zur Bereitstellung elektrischer Energie abgegebene Leistung den unterschiedlichen Verbrauchern zum Beispiel auch dann anteilig zugewiesen werden kann, wenn die Leistungsaufnahme der Verbraucher insgesamt die durch die Vorrichtung zur Bereitstellung elektrischer Energie abgegebene Leistung übersteigt. Das Steuern und/oder das Regeln der Vorrichtung zur Bereitstellung elektrischer Energie und/oder eines oder mehrerer der elektrischen Verbraucher kann in diesem Fall basierend auf den jeweils zugewiesenen Leistungs- oder Energieanteilen basieren.

Gibt die Vorrichtung zur Bereitstellung elektrischer Energie zum Beispiel nur halb so viel elektrische Leistung ab wie gegenwärtig durch die mehreren Verbraucher insgesamt benötigt, kann die Steuerungsvorrichtung für jedem der Verbraucher einen Energiezuweisungskoeffizienten von 0,5 bestimmen.

Basierend auf den durch die Steuerungsvorrichtung bestimmten Energiezuweisungskoeffizienten kann auch die gleichzeitig vom Verteilnetz an die mehreren Verbraucher bereitgestellte elektrische Energie den einzelnen Verbrauchern, zum Beispiel für Abrechnungszwecke, anteilig zugewiesen werden.

Die Energiezuweisungskoeffizienten können daher insbesondere auch angeben, welcher Anteil einer gegenwärtig durch einen einzelnen Verbraucher aufgenommenen elektrischen Leistung durch die Leistungsabgabe der Vorrichtung zur Bereitstellung elektrischer Energie kompensiert wird.

Optional kann der Energiezuweisungskoeffizient den Anteil der tatsächlich physikalisch durch die Vorrichtung zur Bereitstellung elektrischer Energie an einen einzelnen Verbraucher bereitgestellten Energie kennzeichnen. Jedoch ist dieses nicht in allen Ausführungsformen notwendig. In einigen Varianten kann der Energiezuweisungskoeffizient auch eine lediglich logisch und/oder wirtschaftlich einem der Verbraucher anzurechnende oder zuzuweisende Leistungsabgabe der Vorrichtung zur Bereitstellung elektrischer Energie kennzeichnen.

Weiter kann die Steuerungsvorrichtung dazu eingerichtet sein, die Energiezuweisungskoeffizienten für die Verbraucher jeweils im Vorhinein für Zeitabschnitte mit vorbestimmter Dauer zu bestimmen. Die Zeitabschnitte können zum Beispiel eine Dauer von 5 Minuten, 10 Minuten, 15 Minuten oder einer Stunde aufweisen. Die vorbestimmte Dauer der Zeitabschnitte kann dauerhaft konstant sein oder, insbesondere abhängig von einer Tages- oder Uhrzeit, variieren.

Ein Vorteil hierbei ist, dass die Energiezuweisungskoeffizienten auf diese Weise als zumindest zeitweise konstante Werte definiert oder bestimmt werden können, sodass auf den Energiezuweisungskoeffizienten basierende Regelungs- und Steuerungsprozesse für die Verbraucher, für die Vorrichtung zur Bereitstellung elektrischer Energie und/oder für das Verteilnetz für elektrische Energie einfacher ausführbar sind.

Ein weiterer Vorteil ist, dass die Energiezuweisungskoeffizienten auf diese Weise vor einer tatsächlichen Leistungsabnahme der Verbraucher zumindest für die Zeitabschnitte mit vorbestimmter Dauer als Fixwerte definiert oder bestimmt werden können. Dieses erleichtert einerseits die Abrechnung von zu entgeltenden Verbrauchsanteilen von aus dem Verteilnetz durch die mehreren Verbraucher aufgenommenen elektrischen Energie und andererseits eine Entscheidung zur Aktivierung, Deaktivierung oder Regelung einer steuerbaren oder regelbaren Leistungsaufnahme, zum Beispiel einer Nachtspeicherheizung oder einer Ladestation für ein elektrisch angetriebenes Fahrzeug.

Wenn die Vorrichtung zur Bereitstellung elektrischer Energie eine wetterabhängige Komponente aufweist, zum Beispiel eine Windenergieanlage oder eine Photovoltaikanlage, kann die Steuerungsvorrichtung aktuelle Wetterinformationen und/oder Wettervorhersageinformationen bei der Bestimmung der Energiezuweisungskoeffizienten, insbesondere bei der Bestimmung der Energiezuweisungskoeffizienten im Vorhinein, berücksichtigen.

Weiter kann die Steuerungsvorrichtung dazu eingerichtet sein, die Energiezuweisungskoeffizienten jeweils basierend auf zeitlich zurückliegenden Messungen der zumindest einen ersten Messvorrichtung und basierend auf zeitlich zurückliegenden Messungen der zumindest einen zweiten Messvorrichtung zu bestimmen.

Ein Vorteil hierbei ist, dass die Steuerungsvorrichtung die Energiezuweisungskoeffizienten nicht allein basierend auf gerade aktuellen oder gegenwärtigen Messungen der ersten und zweiten Messvorrichtung bestimmen muss, sondern insbesondere auch auf Durchschnittswerte zeitlich weiter zurückliegender Messungen, insbesondere auf Durchschnittswerte zeitlich zurückliegender Messungen zu bestimmten Uhr- oder Tageszeiten, zurückgreifen kann. Hierdurch kann insbesondere eine mögliche Differenz zwischen einem tatsächlichen Leistungsverhältnis und einem durch den bestimmten Energiezuweisungskoeffizienten angegebenen Leistungsverhältnis minimiert werden.

Die Steuerungsvorrichtung kann weiter dazu eingerichtet sein, einen Bereitstellungspreis für aus dem Verteilnetz aufgenommene elektrische Energie und/oder einen Abnahmepreis für an das Verteilnetz abgegebene elektrische Energie für die jeweiligen Verbraucher bei der Bestimmung der Energiezuweisungskoeffizienten für die jeweiligen Verbraucher zu berücksichtigen.

Ist der Abnahmepreis für elektrische Energie zum Beispiel temporär höher als der Bereitstellungspreis für elektrische Energie, kann die Steuerungsvorrichtung die Energiezuweisungskoeffizienten zum Beispiel derart ändern, dass die durch die Vorrichtung zur Bereitstellung elektrischer Energie generierte Leistung zu einem höheren Anteil an das Verteilnetz zur Verfügung gestellt wird und der Anteil der den Verbrauchern zugewiesenen generierten elektrischen Energie gleichzeitig gesenkt wird. Ein Vorteil hierbei ist eine wirtschaftliche Optimierung des Verhältnisses zwischen der in das Verteilnetz eingespeisten und der über das Verteilnetz bezogenen elektrischen Energie. Variieren der Bereitstellungspreis für aus dem Verteilnetz aufgenommene elektrische Energie und/oder der Abnahmepreis für an das Verteilnetz abgegebene elektrische Energie für die unterschiedlichen Verbraucher, kann die Steuerungsvorrichtung dieses bei der Bestimmung der Energiezuweisungskoeffizienten für die jeweiligen Verbraucher ebenfalls berücksichtigen.

In einer Variante kann zumindest einer der elektrischen Verbraucher und/oder die Vorrichtung zur Bereitstellung elektrischer Energie eine Vorrichtung zur Speicherung elektrischer Energie, insbesondere eine Batterie, aufweisen.

Die Steuerungsvorrichtung kann dazu eingerichtet sein, eine Leistungsaufnahme und/oder eine Leistungsabgabe der Vorrichtung zur Speicherung elektrischer Energie bei der Bestimmung der Energiezuweisungskoeffizienten zu berücksichtigen. Zum Beispiel kann der Energiezuweisungskoeffizient für einen der Verbraucher zeitweise abgesenkt oder erhöht werden, wenn eine Vorrichtung zur Speicherung elektrischer Energie dieses Verbrauchers mit, insbesondere durch die Vorrichtung zur Bereitstellung elektrischer Energie generierter elektrischer Energie, geladen oder entladen wird.

Alternativ oder ergänzend kann die Steuerungsvorrichtung weiter dazu eingerichtet sein, eine Leistungsaufnahme und/oder eine Leistungsabgabe der Vorrichtung zur Speicherung elektrischer Energie, insbesondere basierend auf dem Bereitstellungspreis für aus dem Verteilnetz aufgenommene elektrische Energie und/oder dem Abnahmepreis für an das Verteilnetz abgegebene elektrische Energie, zu steuern.

Zum Beispiel kann die Steuerungsvorrichtung das Laden einer Vorrichtung zur Speicherung elektrischer Energie veranlassen oder aktivieren, wenn die Vorrichtung zur Bereitstellung elektrischer Energie mehr Energie generiert als durch die Verbraucher aufgenommen wird. Nehmen die Verbraucher mehr Energie auf als durch die Vorrichtung zur Bereitstellung elektrischer Energie generiert wird, kann die Steuerungsvorrichtung das Entladen einer Vorrichtung zur Speicherung elektrischer Energie veranlassen oder aktivieren.

Ein Vorteil der Berücksichtigung von Vorrichtungen zur Speicherung elektrischer Energie bei der Bestimmung der Energieverbrauchskoeffizienten durch die Steuerungsvorrichtung ist, dass eine Belastung des Verteilnetzes durch die verbesserte Kompensation von Spitzenwerten bei der Generierung von elektrischer Energie und/oder für den Bedarf an elektrischer Energie weiter reduziert werden kann.

Das Steuerungssystem kann weiter zumindest eine Vorrichtung zur Ermittlung von zu entgeltenden Verbrauchsanteilen von durch die mehreren Verbraucher insgesamt aus dem Verteilnetz aufgenommener elektrischer Energie aufweisen. Diese Vorrichtung kann dazu eingerichtet sein, einen Entgeltbetrag für die aus dem Verteilnetz durch die mehreren Verbraucher insgesamt aufgenommene elektrische Energie basierend auf den durch die Steuerungsvorrichtung bestimmten Energiezuweisungskoeffizienten zwischen den mehreren Verbrauchern aufzuteilen.

Optional kann die Vorrichtung zur Ermittlung von zu entgeltenden Verbrauchsanteilen von durch die mehreren Verbraucher insgesamt aus dem Verteilnetz aufgenommener elektrischer Energie weiter dazu eingerichtet sein, einen Entgeltbetrag für die während eines, insbesondere vordefinierten, Zeitabschnitts mit vorbestimmter Dauer insgesamt durch die mehreren Verbraucher aufgenommene elektrische Energie zwischen den mehreren Verbrauchern aufzuteilen.

Ein Vorteil hierbei ist, dass die Verbraucher einen wirtschaftlichen Anreiz zu einer an der Leistungsabgabe der Vorrichtung zur Bereitstellung elektrischer Energie orientierten Steuerung ihrer Leistungsaufnahme erhalten. Hierdurch kann die Belastung des Verteilnetzes weiter verringert werden. Insbesondere erhalten die Verbraucher einen Anreiz dazu, die durch die Vorrichtung zur Bereitstellung elektrischer Energie zur Verfügung gestellte elektrische Energie dann zu nutzen, wenn die anderen Verbraucher dieses gerade nicht tun und/oder wenn die Vorrichtung zur Bereitstellung elektrischer Energie gerade besonders viel elektrische Energie generiert.

In einer Variante kann die Steuerungsvorrichtung durch eine oder mehrere räumlich von der Vorrichtung zur Bereitstellung elektrischer Energie und/oder von den mehreren Verbrauchern getrennte oder beabstandete Rechnervorrichtung ausgebildet sein. Zum Beispiel kann die Steuerungsvorrichtung, optional auch gemeinsam mit der Vorrichtung zur Ermittlung von zu entgeltenden Verbrauchsanteilen, mit Hilfe eines oder mehrerer Cloud-Server ausgebildet sein.

Optional kann die Steuerungsvorrichtung mit der ersten Messvorrichtung und/oder mit der zweiten Messvorrichtung und/oder mit der Vorrichtung zur Bereitstellung elektrischer Energie und/oder mit einem oder mehreren der elektrischen Verbraucher und/oder mit der Vorrichtung zur Ermittlung von zu entgeltenden Verbrauchsanteilen von durch die mehreren Verbraucher insgesamt aus dem Verteilnetz aufgenommener elektrischer Energie durch eine gesicherte, insbesondere kryptierte, Datenverbindung gekoppelt sein. Die Datenverbindung kann zumindest teilweise drahtlos, insbesondere mittels einer Funkverbindung, implementiert sein.

Die Vorrichtung zur Bereitstellung elektrischer Energie kann zumindest eine der folgenden Anlagen aufweisen: eine Solarenergieanlage, insbesondere eine Photovoltaikanlage; eine Windenergieanlage; eine Geothermieanlage; eine Brennstoffzelle; eine Verbrennungsanlage, insbesondere eine Wasserstoffverbrennungsanlage oder eine Biomasseverbrennungsanlage; und eine Vorrichtung zur Speicherung elektrischer Energie, insbesondere eine Batterie. Die genannten Anlagen können jeweils zumindest teilweise durch die Steuerungsvorrichtung basierend auf den bestimmten Energiezuweisungskoeffizienten gesteuert und/oder geregelt werden.

Die mehreren elektrischen Verbraucher können zumindest eine der folgenden Vorrichtungen aufweisen: einen Energiespeicher, insbesondere eine Batterie; eine Ladestation für ein elektrisch angetriebenes Fahrzeug; eine Klimaanlage; eine Heizungsvorrichtung; und eine Vorrichtung zur Erwärmung von Wasser. Die genannten Vorrichtungen können jeweils zumindest teilweise durch die Steuerungsvorrichtung basierend auf den bestimmten Energiezuweisungskoeffizienten gesteuert und/oder geregelt werden.

Die vorangehend beschriebenen Varianten schließen sich gegenseitig ausdrücklich nicht aus und können sich jeweils gegenseitig ergänzend in einem gemeinsamen System implementiert werden.

Weiter versteht es sich, dass die zuvor erläuterten beispielhaften Ausführungsformen nicht abschließend sind und den hier offenbarten Gegenstand nicht beschränken. Insbesondere ist für den Fachmann ersichtlich, dass er die beschriebenen Merkmale beliebig miteinander kombinieren kann und/oder verschiedene Merkmale weglassen kann, ohne dabei von dem hier offenbarten Gegenstand abzuweichen.

Weitere Merkmale, Eigenschaften, Vorteile und mögliche Abwandlungen werden für einen Fachmann anhand der nachstehenden Beschreibung deutlich, in der auf die beigefügten Zeichnungen Bezug genommen ist. Dabei zeigen alle beschriebenen und/oder bildlich dargestellten Merkmale für sich oder in beliebiger Kombination die hier offenbarten Gegenstände.
- Fig. 1: zeigt schematisch ein erstes Beispiel für ein Steuerungssystem zur anteiligen Zuweisung von lokal generierter elektrischer Energie zu mehreren elektrischen Verbrauchern in einem Verteilnetz für elektrische Energie.
- Fig. 2: zeigt schematisch ein zweites Beispiel für ein Steuerungssystem zur anteiligen Zuweisung von lokal generierter elektrischer Energie zu mehreren elektrischen Verbrauchern in einem Verteilnetz für elektrische Energie.
- Fig. 3: zeigt schematisch ein drittes Beispiel für ein Steuerungssystem zur anteiligen Zuweisung von lokal generierter elektrischer Energie zu mehreren elektrischen Verbrauchern in einem Verteilnetz für elektrische Energie.

Soweit nicht explizit abweichend beschrieben, identifizieren identische Bezugszeichen in den Zeichnungen jeweils gleiche Vorrichtungen und Vorrichtungskomponenten.

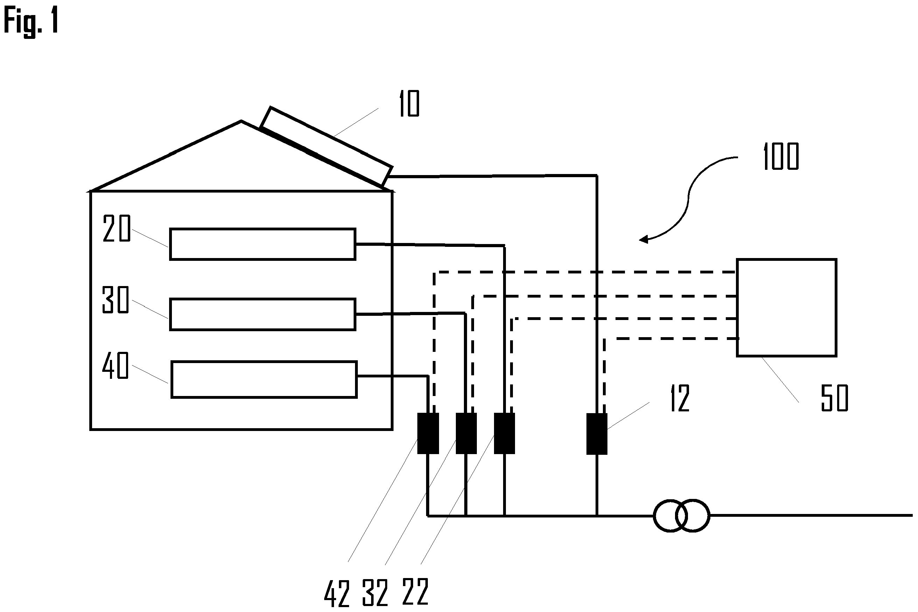

Die Fig. 1 zeigt ein Beispiel für ein Steuerungssystem 100 zur anteiligen Zuweisung von lokal generierter elektrischer Energie zu mehreren elektrischen Verbrauchern in einem Verteilnetz für elektrische Energie. Das Steuerungssystem 100 verbessert die Stabilität des Verteilnetzes, indem es die lokale Speicherung elektrischer Energie erleichtert und Spitzenbelastungen des Verteilnetzes durch eine Steuerung von Systemkomponenten entgegenwirkt.

Die Fig. 1 zeigt ein Mehrparteienhaus mit einer auf dem Gebäudedach angeordneten Photovoltaikanlage 10 und drei voneinander unabhängigen Verbrauchereinheiten 20, 30 und 40. Die Verbrauchereinheiten 20, 30 und 40 sind jeweils elektrische Verbraucher, d.h. Leistungssenken.

Sowohl die Photovoltaikanlage 10 als auch die Verbrauchereinheiten 20, 30 und 40 sind jeweils mit einem Verteilnetz für elektrischen Strom, hier einem Niederspannungsnetz, gekoppelt.

Die durch die Photovoltaikanlage 10 abgegebene elektrische Leistung wird mit der ersten Messvorrichtung 12 gemessen. Die Messvorrichtung 12 ist dazu eingerichtet, sowohl eine aktuell oder gegenwärtig bereitgestellte elektrische Leistung zu messen als auch einen zeitlich zurückliegenden Verlauf der durch die Photovoltaikanlage 10 abgegebenen elektrischen Leistung aufzuzeichnen oder zu speichern.

Weiter wird die durch die Verbrauchereinheiten 20, 30 und 40 aufgenommene elektrische Leistung mit einer zweiten Messvorrichtung, welche die drei jeweils den Verbrauchereinheiten 20, 30 und 40 zugeordneten Einzelmessvorrichtungen 22, 32 und 42 umfasst, gemessen.

Die Einzelmessvorrichtungen 22, 32 und 42 sind dazu eingerichtet, sowohl die aktuell oder gegenwärtig durch die jeweiligen Verbrauchereinheiten 20, 30 und 40 aufgenommenen elektrischen Leistungen zu messen als auch die zeitlich zurückliegenden Verläufe der durch die jeweiligen Verbrauchereinheiten 20, 30 und 40 aufgenommenen elektrischen Leistungen aufzuzeichnen oder zu speichern.

Weiter weist das in der Fig. 1 gezeigte Steuerungssystem 100 die Steuerungsvorrichtung 50 auf, die dazu eingerichtet ist, basierend auf den Messungen der zumindest einen ersten Messvorrichtung 12 und der zumindest einen zweiten Messvorrichtung einen Energiezuweisungskoeffizienten für jede der drei Verbrauchereinheiten 20, 30 und 40 zu bestimmen. Die Energiezuweisungskoeffizienten geben an, wie viel der lokal generierten elektrischen Energie den einzelnen elektrischen Verbrauchern zugerechnet wird.

Zur Bestimmung der Energiezuweisungskoeffizienten ist die Steuerungsvorrichtung 50 mit der ersten Messvorrichtung 12 und den Einzelmessvorrichtungen 20, 30 und 40 gekoppelt. Insbesondere kann die Steuerungsvorrichtung 50 auf die Messergebnisse der ersten Messvorrichtung 12 und der Einzelmessvorrichtungen 20, 30 und 40 zugreifen. Optional kann die Steuerungsvorrichtung 50 auch einen Verlauf der Messungen der ersten Messvorrichtung 12 und der Einzelmessvorrichtungen 20, 30 und 40 erfassen und/oder speichern und bei der Bestimmung der Energiezuweisungskoeffizienten berücksichtigen. Weiter kann die Steuerungsvorrichtung 50 bei der Bestimmung der Energiezuweisungskoeffizienten auch, zum Beispiel basierend auf Messungen innerhalb eines Vergleichszeitraums am Vortag oder basierend auf Messungen innerhalb von Vergleichszeiträumen an mehreren vorangegangenen Tagen, eine prognostizierte Generierung von elektrischer Energie und/oder einen prognostizierten Bedarf an elektrischer Energie bei der Bestimmung der Energiezuweisungskoeffizienten berücksichtigen. Auch ein gegenwärtiger oder zu erwartender Abnahme- oder Bereitstellungspreis für elektrische Energie, die an das Verteilnetz abgegeben wird oder die in das Verteilnetz eingespeist wird, kann durch die Steuerungsvorrichtung 50 bei der Bestimmung der Energiezuweisungskoeffizienten für die Verbrauchereinheiten 20, 30 und 40 berücksichtigt werden.

Weiter kann die Steuerungsvorrichtung 50 die Energiezuweisungskoeffizienten für die Verbrauchereinheiten 20, 30 und 40 jeweils im Vorhinein für einen bestimmten Zeitraum, zum Beispiel für die jeweils nächsten 5, 10, 15 oder 60 Minuten, bestimmen.

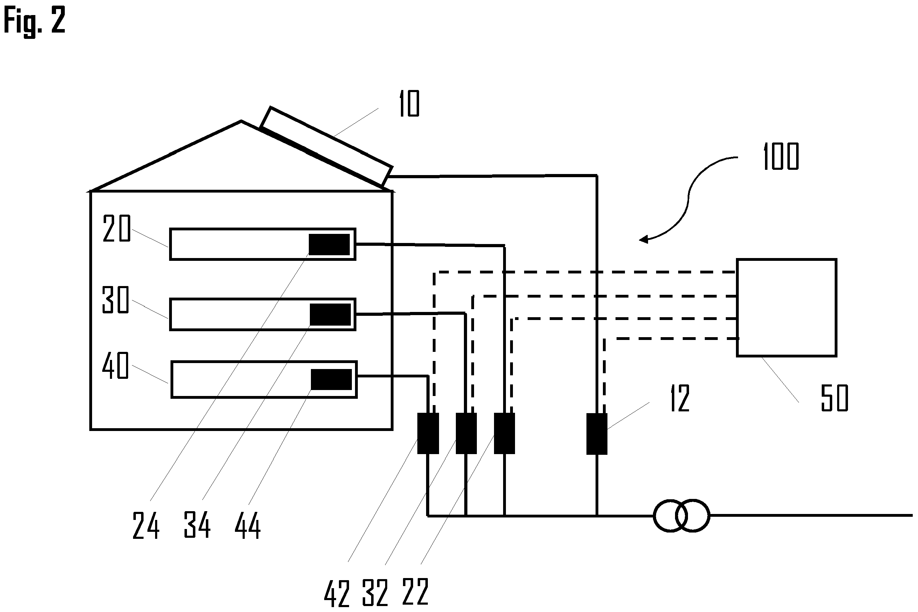

Basierend auf den bestimmten Energiezuweisungskoeffizienten steuert die Steuerungsvorrichtung 50 weiter einzelne Komponenten der Verbrauchseinheiten 20, 30 und 40 und der Photovoltaikanlage 10. Die gesteuerten Komponenten können, wie in der Fig. 2 gezeigt, Vorrichtungen zur Speicherung elektrischer Energie sein, deren Aufladung durch die Steuerungsvorrichtung 50 jeweils dann aktiviert wird, wenn eine mit den jeweiligen Vorrichtungen zur Speicherung elektrischer Energie gekoppelte Verbrauchseinheit weniger elektrische Energie benötigt als ihr durch die Photovoltaikanlage 10 für den lokalen Verbrauch zur Verfügung gestellt werden könnte. Alternativ oder ergänzend können auch ein in die Photovoltaikanlage 10 integrierter Energiespeicher oder Vorrichtungen mit einem zeitlich planbaren Bedarf an elektrischer Energie, zum Beispiel eine Spül- oder Waschmaschine oder eine Nachtspeicherheizung, durch die Steuerungsvorrichtung 50 gesteuert werden.

Die in der Fig. 2 gezeigten Verbrauchereinheiten 20, 30 und 40 weisen jeweils eine Batterie 24, 34 und 44 auf.

In anderen, nicht gezeigten, Ausführungsbeispielen können die Verbrauchereinheiten auch mit Ladestationen für elektrisch angetriebene Fahrzeuge gekoppelt sein, sodass die Batterien von an diesen Ladestationen zum Zweck der Aufladung angeordneten Fahrzeugen Vorrichtungen zur Speicherung elektrischer Energie für die Verbrauchereinheiten darstellen.

Die Batterien 24, 34 und 44 können insbesondere die durch die Photovoltaikanlage 10 generierte elektrische Energie speichern, zum Beispiel dann, wenn diese in einem bestimmten Zeitraum mehr elektrische Energie erzeugt als durch die Verbrauchereinheiten 10, 20 und 30 benötigt wird.

Die Steuerungseinheit 50 kann ein Aufladen und/oder ein Entladen der einzelnen Batterien 24, 34 und 44 bei der Bestimmung der jeweiligen Energiezuweisungskoeffizienten für die Verbrauchereinheiten 20, 30 und 40 berücksichtigen. Insbesondere kann die Steuerungseinheit 50 ein in der Vergangenheit durchgeführtes Aufladen einer der Batterien 24, 34 und 44 mit durch die Photovoltaikanlage 10 generierter elektrischer Energie, die zumindest anteilig zur Deckung eines gegenwärtigen Energiebedarfs einer der Verbrauchereinheiten 20, 30 und 40 beiträgt, bei der Bestimmung eines jeweiligen Energiezuweisungskoeffizienten für die Verbrauchereinheiten 20, 30 und 40 berücksichtigen.

Weiter kann auch ein Aufladen und/oder Entladen der gezeigten Batterien 24, 34 und 44 als solches durch die Steuerungseinheit 50 gesteuert oder geregelt werden. Zum Beispiel kann die Steuerungseinheit 50 ein Aufladen einer oder mehrerer der Batterien 24, 34 und 44 veranlassen, wenn die Menge der durch die Photovoltaikanlage 10 generierten Energie die Menge der durch die Verbrauchereinheiten 20, 30 und 40 benötigten Energie übersteigt, und ein Entladen einer oder mehrerer der Batterien 24, 34 und 44 veranlassen, wenn die Menge der durch die Photovoltaikanlage 10 generierten Energie die Menge der durch die Verbrauchereinheiten 20, 30 und 40 benötigten Energie unterschreitet.

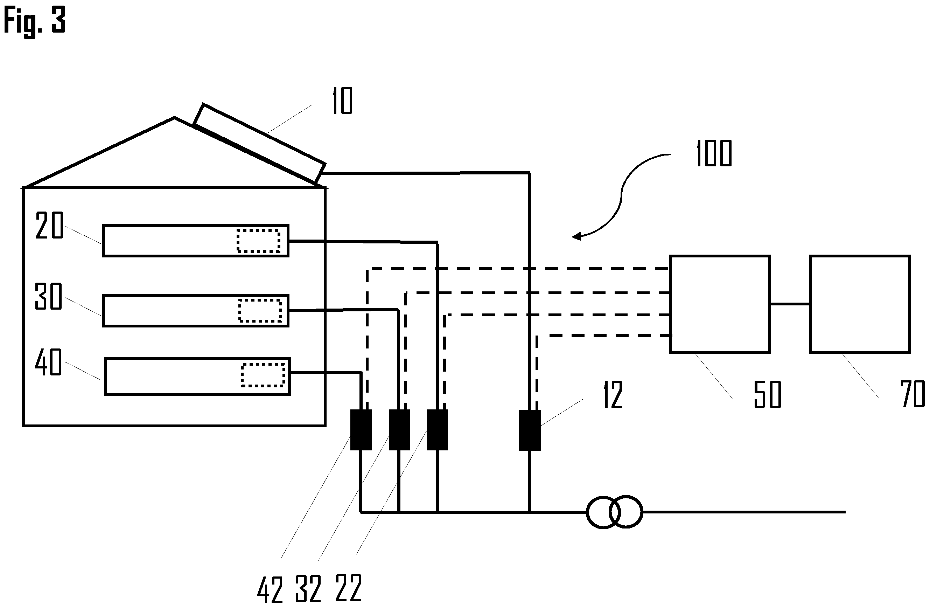

Wie weiter in der Fig 3 gezeigt, kann die Steuerungsvorrichtung 50 mit einer Vorrichtung 70 zur Ermittlung von zu entgeltenden Verbrauchsanteilen von durch die Verbrauchereinheiten 20, 30 und 40 insgesamt aus dem Verteilnetz aufgenommener elektrischer Energie, zum Beispiel mit einem Smart Meter, gekoppelt sein. In einer nicht gezeigten Variante können die Steuerungsvorrichtung 50 und die Vorrichtung 70 auch gemeinsam miteinander ausgebildet sein. Weiter kann die Vorrichtung 70 unabhängig davon, ob die Verbrauchereinheiten 20, 30 und 40 wie in der Fig. 2 gezeigt mit Vorrichtungen zur Speicherung elektrischer Energie gekoppelt sind, mit der Steuerungsvorrichtung 50 gekoppelt oder gemeinsam mit dieser ausgebildet sein.

Die Vorrichtung 70 teilt einen insgesamt zu entrichtenden Entgeltbetrag für die aus dem Verteilnetz durch die mehreren Verbrauchereinheiten 20, 30 und 40 insgesamt aufgenommene elektrische Energie basierend auf den durch die Steuerungsvorrichtung 50 bestimmten Energiezuweisungskoeffizienten zwischen den mehreren Verbrauchereinheiten auf.

Die durch die Photovoltaikanlage 10 generierte und durch die Verbrauchereinheiten 20, 30 und 40 lokal genutzte elektrische Energie kann hierdurch, insbesondere zur Berechnung eines für die jeweiligen Verbrauchereinheiten zu entrichtenden Entgelts für aus dem Verteilnetz bezogene elektrische Energie, zwischen den verschiedenen Verbrauchereinheiten 20, 30 und 40 aufgeteilt werden. Hierdurch kann insbesondere das zu entrichtende Entgelt für jene Verbrauchereinheiten reduziert werden, die überproportional viel der lokal erzeugten Energie zur Deckung ihres Energiebedarfs genutzt haben.

Weiter wird hierdurch ein wirtschaftlicher Anreiz dazu geschaffen, einen zeitlich planbaren Bedarf an elektrischer Energie, zum Beispiel das Aufladen von mit elektrischer Energie angetriebenen Fahrzeugen, an den zeitlich variablen Bereitstellungskapazitäten einer Vorrichtung zur Bereitstellung elektrischer Energie, zum Beispiel der Photovoltaikanlage 10, auszurichten.

Nutzt in einem bestimmten Zeitraum zum Beispiel lediglich eine der Verbrauchereinheiten 20, 30 und 40 die lokal generierte elektrische Energie zur zumindest anteiligen Deckung ihres Energiebedarfs, kann die lokal generierte elektrische Energie vollständig dieser Verbrauchereinheit zugewiesen werden, sodass sich die Menge der für diese Verbrauchereinheit zu entgeltenden elektrischen Energie aus dem Verteilnetz reduziert. Nutzen in einem bestimmten Zeitraum hingegen mehrere der Verbrauchereinheiten 20, 30 und 40 die lokal generierte elektrische Energie zur zumindest anteiligen Deckung ihres Energiebedarfs, kann die Vorrichtung 70 ein Entgelt für die insgesamt aus dem Verteilnetz aufgenommene elektrische Energie basierend auf den durch die Steuerungsvorrichtung 50 bestimmten Energiezuweisungskoeffizienten zwischen den mehreren Verbrauchereinheiten 20, 30 und 40 aufteilen.

Da die Steuerungsvorrichtung 50 die Energiezuweisungskoeffizienten für die Verbrauchereinheiten 20, 30 und 40 für jeweils unterschiedliche Zeiträume, basierend auf den Messungen durch die Messvorrichtungen, unterschiedlich bestimmen kann, wird ferner auch ein Anreiz zur zeitlichen Abstimmung des planbaren Energiebedarfs unter den einzelnen Verbrauchereinheiten 20, 30 und 40 geschaffen. Hierdurch kann ein Gesamtbedarf für durch das Verteilnetz bereitzustellende elektrische Energie besser auf unterschiedliche Zeiträume verteilt werden, sodass Spitzenbelastungen für das Verteilnetz reduziert werden und eine insgesamt gleichmäßigere Nachfrage für elektrische Energie aus dem Verteilnetz gefördert wird. Auch dieses trägt zur Entlastung des Verteilnetzes bei.

In einer Variante können die in den Fig. 1 bis 3 gezeigte Steuerungsvorrichtung 50 und/oder die in der Fig. 3 gezeigte Vorrichtung 70 durch eine oder mehrere räumlich von der Photovoltaikanlage 10 und/oder von den Verbrauchereinheiten 20, 30 und 40 getrennte Rechnervorrichtungen ausgebildet sein.

Die hier beschriebenen Varianten des Systems sowie dessen Funktions- und Betriebsaspekte dienen lediglich dem besseren Verständnis seiner Struktur, Funktionsweise und Eigenschaften; sie schränken die Offenbarung nicht etwa auf die Ausführungsformen ein. Die gezeigten Fig. sind schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches/welche in den Fig. oder im Text offenbart ist/sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen den beschriebenen Vorrichtungen zuzuordnen sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst und können zum Gegenstand weiterer Ansprüche gemacht werden. Auch die Ansprüche limitieren nicht die Offenbarung und damit die Kombinationsmöglichkeiten aller aufgezeigten Merkmale untereinander. Alle offenbarten Merkmale sind explizit auch einzeln und in Kombination mit allen anderen Merkmalen hier offenbart.

## Patentansprüche

1. Ein Steuerungssystem (100) zur Verbesserung einer Stabilität eines Verteilnetzes für elektrische Energie mit
zumindest einer Vorrichtung zur Bereitstellung elektrischer Energie (10),
zumindest einer ersten Messvorrichtung (12), die dazu eingerichtet ist, eine durch die Vorrichtung zur Bereitstellung elektrischer Energie abgegebene elektrische Leistung zu messen,
mehreren elektrischen Verbrauchern (20, 30, 40),
zumindest einer zweiten Messvorrichtung (22, 32, 42), die dazu eingerichtet ist, eine elektrische Leistungsaufnahme der jeweiligen elektrischen Verbraucher zu messen,
einer Steuerungsvorrichtung (50), die dazu eingerichtet ist, basierend auf den Messungen der zumindest einen ersten Messvorrichtung und der zumindest einen zweiten Messvorrichtung einen Energiezuweisungskoeffizienten für jeden der mehreren elektrischen Verbraucher zu bestimmen, wobei
die Steuerungsvorrichtung (50) ferner dazu eingerichtet ist, die Vorrichtung zur Bereitstellung elektrischer Energie (10) oder zumindest einen der elektrischen Verbraucher (20, 30, 40) basierend auf den bestimmten Energiezuweisungskoeffizienten zu steuern.

2. Das Steuerungssystem (100) nach Anspruch 1, wobei
die Steuerungsvorrichtung (50) ferner dazu eingerichtet ist, die Energiezuweisungskoeffizienten jeweils im Vorhinein für Zeitabschnitte mit vorbestimmter Dauer zu bestimmen.

3. Das Steuerungssystem (100) nach Anspruch 1 oder 2, wobei
die Steuerungsvorrichtung (50) ferner dazu eingerichtet ist, die Energiezuweisungskoeffizienten jeweils basierend auf zeitlich zurückliegenden Messungen der zumindest einen ersten Messvorrichtung und basierend auf zeitlich zurückliegenden Messungen der zumindest einen zweiten Messvorrichtung zu bestimmen.

4. Das Steuerungssystem (100) nach einem der Ansprüche 1 bis 3, wobei
die Steuerungsvorrichtung (50) ferner dazu eingerichtet ist, einen Bereitstellungspreis für aus dem Verteilnetz aufgenommene elektrische Energie und/oder einen Abnahmepreis für an das Verteilnetz abgegebene elektrische Energie bei der Ermittlung der Energiezuweisungskoeffizienten für die Verbraucher zu berücksichtigen.

5. Das Steuerungssystem (100) nach einem der Ansprüche 1 bis 4, wobei
zumindest einer der elektrischen Verbraucher (20, 30, 40) und/oder die zumindest eine Vorrichtung zur Bereitstellung elektrischer Energie (10) eine Vorrichtung zur Speicherung elektrischer Energie (24, 34, 44), insbesondere eine Batterie, aufweist.

6. Das Steuerungssystem (100) nach Anspruch 5, wobei
die Steuerungsvorrichtung (50) ferner dazu eingerichtet ist, eine Leistungsaufnahme und/oder eine Leistungsabgabe einer Vorrichtung zur Speicherung elektrischer Energie (24, 34, 44) bei der Bestimmung der Energiezuweisungskoeffizienten zu berücksichtigen.

7. Das Steuerungssystem (100) nach einem der Ansprüche 5 oder 6, wobei
die Steuerungsvorrichtung (50) ferner dazu eingerichtet ist, die Leistungsaufnahme und/oder die Leistungsabgabe der Vorrichtung zur Speicherung elektrischer Energie (24, 34, 44), insbesondere basierend auf dem Bereitstellungspreis für aus dem Verteilnetz aufgenommene elektrische Energie und/oder dem Abnahmepreis für an das Verteilnetz abgegebene elektrische Energie, zu steuern.

8. Das Steuerungssystem (100) nach einem der Ansprüche 1 bis 7, weiter umfassend
zumindest eine Vorrichtung (70) zur Ermittlung von zu entgeltenden Verbrauchsanteilen von durch die mehreren Verbraucher (20, 30, 40) insgesamt aus dem Verteilnetz aufgenommener elektrischer Energie, die dazu eingerichtet ist,
einen Entgeltbetrag für die aus dem Verteilnetz durch die mehreren Verbraucher insgesamt aufgenommene elektrische Energie basierend auf den durch die Steuerungsvorrichtung bestimmten Energiezuweisungskoeffizienten zwischen den mehreren Verbrauchern aufzuteilen.

9. Das Steuerungssystem (100) nach dem Anspruch 8, wobei
die Vorrichtung (70) zur Ermittlung von zu entgeltenden Verbrauchsanteilen von durch die mehreren Verbraucher (20, 30, 40) insgesamt aus dem Verteilnetz aufgenommener elektrischer Energie weiter dazu eingerichtet ist, einen Entgeltbetrag für die während eines bestimmten Zeitabschnitts mit vorbestimmter Dauer insgesamt durch die mehreren Verbraucher aufgenommene elektrische Energie zwischen den mehreren Verbrauchern aufzuteilen.

10. Das Steuerungssystem (100) nach einem der Ansprüche, 1 bis 9 wobei
die Steuerungsvorrichtung (50) durch zumindest eine räumlich von der Vorrichtung zur Bereitstellung elektrischer Energie (10) und/oder von den mehreren Verbrauchern (20, 30, 40) getrennte Rechnervorrichtung ausgebildet ist, und/oder
wobei die Steuerungsvorrichtung (50) mit der ersten Messvorrichtung (12) und/oder mit der zweiten Messvorrichtung (22) und/oder mit der Vorrichtung zur Bereitstellung elektrischer Energie (10) und/oder mit einem oder mehreren der elektrischen Verbraucher (20, 30, 40) und/oder mit der Vorrichtung (70) zur Ermittlung von zu entgeltenden Verbrauchsanteilen von durch die mehreren Verbraucher (20, 30, 40) insgesamt aus dem Verteilnetz aufgenommener elektrischer Energie durch eine gesicherte, insbesondere kryptierte, Datenverbindung gekoppelt ist.

11. Das Steuerungssystem (100) nach einem der vorangegangenen Ansprüche, wobei
die Vorrichtung zur Bereitstellung elektrischer Energie (10) zumindest eines der folgenden umfasst: eine Solarenergieanlage, insbesondere eine Photovoltaikanlage; eine Windenergieanlage; eine Geothermieanlage; eine Brennstoffzelle; eine Verbrennungsanlage, insbesondere eine Wasserstoffverbrennungsanlage oder eine Biomasseverbrennungsanlage.

12. Das Steuerungssystem (100) nach einem der vorangegangenen Ansprüche, wobei
zumindest einer der elektrischen Verbraucher (20, 30, 40) zumindest eines der folgenden umfasst: eine Vorrichtung zur Speicherung elektrischer Energie, insbesondere eine Batterie; eine Ladestation für ein elektrisch angetriebenes Fahrzeug; eine Klimaanlage; eine Heizungsvorrichtung; und eine Vorrichtung zur Erwärmung von Wasser.
